# EUROPEAN PATENT APPLICATION

(11) **EP 3 528 132 A1**
(43) Date of publication of application: **21.08.2019**
(21) Application number: 18205837.0
(22) Date of filing: 13.11.2018
(51) Int. Cl.: G06F 13/362, G06F 13/42

(54) **SLAVE DEVICE, CONTROL SYSTEM, COMMUNICATION METHOD FOR RESPONSE DATA AND STORAGE MEDIUM**

(30) Priority: 14.02.2018 JP 2018024090
(71) Applicant: Omron Corporation, Kyoto-shi, Kyoto 600-8530 (JP)
(72) Inventor: MIZUMOTO, Hirohito, Kyoto, 600-8530 (JP); XU, Ziqiang, Kyoto, 600-8530 (JP); YONEDA, Mitsuhiro, Kyoto, 600-8530 (JP)
(74) Representative: Emde, Eric

(57) **Abstract**

A slave device, a control system, a communication method for response data and a recording medium, through which even when a high-urgency response request is obtained during communication of large-capacity data which requires a plurality of cyclic periods, response data corresponding to the high-urgency response request can be communicated quickly, are provided. The slave device includes a cyclic communication portion and a communication management portion. The cyclic communication portion communicates in accordance with pre-set cyclic periods. The communication management portion manages communication of response data corresponding to a response request from a control device. If a request of response data with high priority is received during communication of response data with low priority over a plurality of cyclic periods, the communication management portion temporarily interrupts the communication of the response data with low priority to communicate the response data with high priority.

## Description

### BACKGROUND

### Technical Field

The present invention relates to a control system including a control device and various slave devices that communicate a plurality of control data having different priorities with one another.

### Related Art

Nowadays, an FA (factory automation) system is widely put to practical use. The FA system includes a control device and a plurality of slave devices. The plurality of slave devices are measuring instruments, switches, or drivers for control or the like, and control target machines are connected to the drivers for control.

The control device communicates control data to the plurality of slave devices. At this time, the control device sequentially communicates the control data to the plurality of slave devices at pre-set control periods (cyclic periods) to the plurality of slave devices. In this way, a real-time property of transmission of the control data is ensured. On the other hand, the slave devices communicate data requested by the control data to the control device with the same cyclic period. Hereinafter, the data communicated in accordance with the cyclic periods is referred to as cyclic communication data.

On the other hand, information system data different from the cyclic communication data may be communicated between the control device and the plurality of slave devices. The information system data is data which is not necessarily communicated in the cyclic period like the cyclic communication data and of which the capacity is comparatively large. In a system shown in patent literature 1, the information system data is divided to be communicated in a plurality of cyclic periods.

### [Literature of related art]

### [Patent literature]

[Patent literature 1] Japanese Patent Application Laid-open No. 2004-363782

### SUMMARY

### [Problems to be Solved]

Nowadays, robot devices, or robot control devices controlling the robot devices are widely used as slave devices.

Request data is included in data communicated from a control device to the slave devices such as the robot devices or the robot control devices, and response data is included in data communicated from the slave devices to the control device. These data may have larger capacities than the conventional cyclic communication data. Hereinafter, control data which is communicated between the control device and the slave devices or the like and has a capacity larger than the conventional cyclic communication data is referred to as quasi-cyclic communication data.

On this occasion, it is considered that, for example, the control device and the slave devices communicate the quasi-cyclic communication data in a plurality of cyclic periods.

However, when the slave devices communicate the response data with such large capacities over the plurality of cyclic periods, even if a reply request of high-urgency response data is obtained, only after communication of the large-capacity response data is completed can the high-urgency response data be communicated. For example, even if the slave devices intend to reply response data of location information or status information or the like which has urgency higher than log data during communication of the large-capacity log data, only after the communication of the log data can the high-urgency response data be replied.

Therefore, the present invention is directed to provide a communication technique which can quickly communicate the response data corresponding to the high-urgency response request even when the high-urgency response request is obtained during the communication of the large-capacity data that require a plurality of cyclic periods.

### [Means to Solve the Problems]

According to one example of the disclosure, a slave device includes a cyclic communication portion and a communication management portion. The cyclic communication portion communicates in accordance with pre-set cyclic periods. The communication management portion manages communication of response data corresponding to a response request from a control device. If a request of the response data with high priority is received during communication of the response data with low priority over a plurality of cyclic periods, the communication management portion temporarily interrupts the communication of the response data with low priority to communicate the response data with high priority.

In this configuration, the high-urgency response data is replied quickly even during the communication of the response data over the plurality of cyclic periods.

According to one example of the disclosure, if there are residual capacities in the cyclic periods for communicating the response data with high priority, the communication management portion allocates the residual capacities to the temporarily interrupted response data with low priority.

In this configuration, the temporarily interrupted communication of the response data is restarted without waiting for a new cyclic period after the communication of the response data with high priority.

According to one example of the disclosure, the communication management portion determines priority based on priority data attached to the response request.

In this configuration, determination of the priority is easy.

According to one example of the disclosure, a control system includes the slave device recited in any one of the descriptions above and the control device, and the slave device is a robot device or a robot control device.

In this configuration, when a robot device is included as an FA system, the response data with high priority (for example, location information, status information or the like) is obtained quickly from the robot device, and occurrence of a wait state of control of the FA system is suppressed.

According to one example of the disclosure, a communication method for response data includes: a cyclic communication processing that communicates in accordance with pre-set cyclic periods; and a communication management processing that manages communication of response data corresponding to a response request from a control device; wherein if a request of the response data with high priority is received during communication of the response data with low priority over a plurality of cyclic periods, the communication management processing temporarily interrupts the communication of the response data with low priority to communicate the response data with high priority.

According to one example of the disclosure, a non-transitory computer readable storage medium that storing a communication program for response data, the communication program causing an information processing device to execute: a cyclic communication processing that communicates in accordance with pre-set cyclic periods; and a communication management processing that manages communication of response data corresponding to a response request from a control device, wherein the communication program causes an information processing device to execute: a processing of temporarily interrupting the communication of the response data with low priority to communicate the response data with high priority if a request of the response data with high priority is received during communication of the response data with low priority over a plurality of cyclic periods in the communication management processing.

### [Effect]

According to the present invention, the response data corresponding to the high-urgency response request can be communicated quickly even when the high-urgency response request is obtained during the communication of large-capacity data that requires a plurality of cyclic periods.

### BRIEF DESCRIPTION OF THE DRAWINGS

FIG. 1 is a diagram showing a schematic configuration of a device in a control system.
FIG. 2 is a block diagram showing a configuration of hardware of a control device.
FIG. 3 is a functional block diagram of the control device.
FIG. 4 is a block diagram showing a configuration of hardware of a slave device.
FIG. 5 is a functional block diagram of the slave device.
FIG. 6 is a diagram showing one example of specific data configurations of frame data including request data.
FIG. 7 is a diagram showing one example of specific data configurations of frame data including response data.
FIG. 8 is a flowchart showing communication method for the response data.

### DESCRIPTION OF THE EMBODIMENTS

Embodiments of the present invention are described below with reference to diagrams.

### Application example

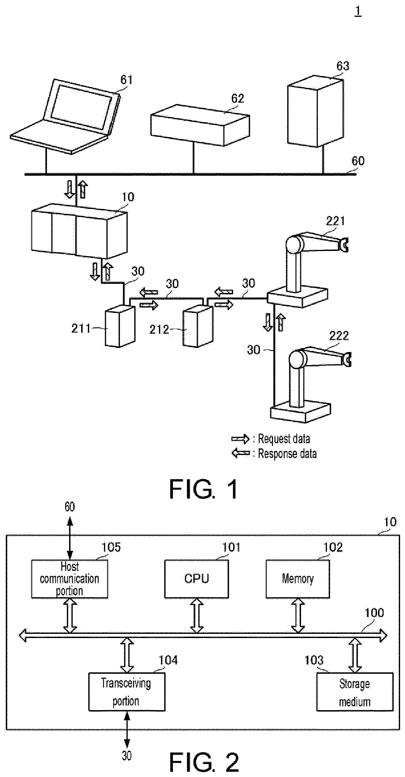

First, application examples of a slave device and a communication method for response data of an embodiment of the present invention are described with reference to diagrams. FIG. 1 is a diagram showing a schematic configuration of a device in a control system.

A slave device 221 and a slave device 222 are, for example, robot devices or robot control devices, and are included in a control system 1. The slave device 221 and the slave device 222 are connected to a control device 10 via a control system network 30. The control device 10 conducts communication with the slave device 221 and the slave device 222 in accordance with cyclic periods set for the control system network 30.

If the slave device 221 and the slave device 222 receive request data including commands or the like from the control device 10, response data of the request data is generated and transmitted to the control device 10.

Here, for example, the slave device 221 receives a new response request while the response data spans a plurality periods of the cyclic periods and the response data is transmitted over the plurality of periods. The slave device 221 detects priority from the new response request.

If the priority of response data to the new response request is higher than the priority of the response data being transmitted over the plurality of periods, the slave device 221 temporarily interrupts the transmission of the response data being transmitted. Then, the slave device 221 transmits the response data to the new response request preferentially.

In this way, the slave devices can quickly communicate the response data corresponding to the high-urgency response request even during the transmission of other response data.

### •Configuration example

The slave device, a control system, a communication method for the response data and a communication program for the response data of embodiments of the present invention are described with reference to the diagrams. In the embodiments, an FA (Factory Automation) system is described as the control system as an example.

FIG. 1 is a diagram showing the schematic configuration of the device in the control system. As shown in FIG. 1, for example, the control system 1 includes the control device 10, a slave device 211, a slave device 212, the slave device 221, the control system network 30, an information communication network 60, a personal computer 61, an industrial personal computer 62, and a database device 63.

### (Data definition)

First, definition of each data is described.

An arrival guarantee time (a first guarantee time) of first control data is determined by one period of the cyclic periods (for example, 10 msec or less) used in the control system network 30. The first control data includes a control data group of one bit to tens of bytes. The arrival guarantee time is, for example, a longest (slowest) time at which the control data arrives so that target slave devices operate normally.

Second control data is data for which an arrival guarantee time (a second guarantee time) is set longer than one period of the cyclic periods. There is data with a larger data capacity than the first control data in the second control data, for example, there is data with the capacity larger than data capacity which can be communicated at one period of the cyclic periods. The second control data is control data in which an order of a plurality of information to be formed is determined. The second control data may include request data that is transmitted from the control device 10 to the slave device 221 or the slave device 222, and response data that is transmitted from the slave device 221 or the slave device 222 to the control device 10. The request data includes, for example, a plurality of commands for realizing sequence operations of the robot devices, log request data or the like. The response data is data related to this command group, and include, for example, location information, status information, log data or the like.

Information system data is different from the first control data and the second control data, and is various data of which an arrival guarantee time is not set. The information system data is, for example, data of a best effort type.

The first control data and the second control data are data communicated in accordance with the cyclic periods, and the information system data is data communicated in a specification not necessarily in accordance with the cyclic periods.

### (Control system)

The control system network 30 is, for example, a network in accordance with Ether CAT (registered trademark), or PROFINET or the like as a network standard. Furthermore, the control system network 30 is not limited thereto and may be a network conducting transception of data in synchronization with the cyclic periods. The control device 10, the slave device 211, the slave device 212 and the slave device 221 are connected by the control system network 30.

The information communication network 60 is, for example, a network in accordance with Ethernet (registered trademark) as a network standard. The control device 10, the personal computer 61, the industrial personal computer 62 and the database device 63 are connected by the information communication network 60.

Editing tools and the like of a control program are installed in the personal computer 61. The personal computer 61 performs creation, edition and output of control programs of the control device 10, the slave device 211 and the slave device 212. The personal computer 61 outputs the control programs to the control device 10.

In the industrial personal computer 62, for example, editing tools and the like of a control program for robot are installed. The industrial personal computer 62 performs creation, edition and output of a control program of the slave device 221. The industrial personal computer 62 outputs, for example, the control program for robot to the control device 10. For example, request data of the second control data is included in the control program for robot. Besides, data responding the request data is response data.

The database device 63 obtains logs or the like of each device from the control device 10. Furthermore, a device conducting generation and acquisition of original data of the information system data is not limited to the database device 63 and can also be other devices. In addition, the personal computer 61, the industrial personal computer 62 and the database device 63 are devices configuring a host system, and devices configuring the host system are not limited thereto.

Specifically, the control device 10 is realized by a PLC (Programmable Logic Controller) for example. The control device 10 may be other devices as long as it is a device communicating the control data via the control system network 30 and communicating various data via the information communication network 60.

The control device 10 uses, for example, the control program from the personal computer 61 to generate the first control data. The control device 10 uses, for example, the control program for robot from the industrial personal computer 62 to generate the second control data. Furthermore, the control device 10 can also use the control program from the personal computer 61 to generate the second control data. The above-described request data is included in the second control data transmitted from the control device 10.

In addition, the control device 10 generates the information system data. The information system data includes, for example, information that is obtained by the personal computer 61 from the slave device 211, the slave device 212 and the slave device 221 which are connected to the control system network 30, and an acquisition request of the information or the like. Therefore, for example, the information system data is generated by the control device 10 corresponding to instructions from the personal computer 61.

Specifically, the slave device 211 and the slave device 212 are realized by, for example, measuring instruments or the like such as servo drivers and sensors. Furthermore, the slave device 211 and the slave device 212 may be other devices as long as they are devices operating under the first control data.

Specifically, the slave device 221 and the slave device 222 are realized by, for example, the robot devices or the robot control devices connected to the robot devices. Furthermore, the slave device 221 and the slave device 222 may be other devices as long as they are devices operating under the second control data. The above-described response data is included in the second control data transmitted from the slave device 221 and slave device 222.

The control device 10, the slave device 211, the slave device 212, the slave device 221 and the slave device 222 schedule transception of the first control data, the second control data and the information system data. The control device 10, the slave device 211, the slave device 212, the slave device 221 and the slave device 222 communicate, corresponding to this schedule, the first control data and the second control data in accordance with the cyclic periods. In addition, when necessary, the control device 10, the slave device 211, the slave device 212, the slave device 221 and the slave device 222 use bands different from bands of the first control data and the second control data to communicate the information system data according to the schedule.

At this time, if the data capacity of the second control data is larger than an upper limit capacity for the second control data guaranteed in one period of the cyclic periods, the control device 10, the slave device 221 and the slave device 222 divide the second control data into a plurality of data for communication. Then, the control device 10 allocates the plurality of data for communication to a plurality of cyclic periods to conduct communication.

That is, if the data capacity of the request data is larger than the upper limit capacity for the second control data, the control device 10 divides the request data into a plurality of data for communication to conduct transmission. In addition, if the data capacity of the response data is larger than the upper limit capacity for the second control data, the slave device 221 and the slave device 222 divide the response data into a plurality of data for communication to conduct transmission.

Furthermore, when acquiring another new second control data (request data) while communicating the second control data (the request data) in a period which is divided into a plurality of cyclic periods, the control device 10 conducts communication control according to the priority of each second control data (request data). In addition, when acquiring another new second control data (response data) while communicating the second control data (the response data) in a period which is divided into a plurality of cyclic periods, the slave device 221 and the slave device 222 conduct communication control according to the priority of each second control data (response data). The specific communication control is described later.

### (Hardware configuration of control device)

FIG. 2 is a block diagram showing a configuration of hardware of the control device.

As shown in FIG. 2, the control device 10 includes a CPU 101, a memory 102, a storage medium 103, a transceiving portion 104 and a host communication portion 105 as the configuration of hardware. In the control device 10, the CPU 101, the memory 102, the storage medium 103, the transceiving portion 104, and the host communication portion 105 are connected by a data bus 100.

The CPU 101 realizes each processing of each functional block described later by reading out a system program and a user application program stored in the storage medium 103 to the memory 102 to conduct the system program and the user application program. The memory 102 is realized by, for example, a volatile storage element such as a DRAM or a SRAM. In addition, the storage medium 103 is realized by, for example, a non-volatile storage medium such as a magnetic storage medium, a flash memory or the like.

The transceiving portion 104 is an interface of the control system network 30 in the control device 10, and conducts the transceiving (communication) in accordance with the cyclic periods of the first control data and the second control data. In addition, the transceiving portion 104 uses, for example, the communication bands different from the communication bands of the first control data and the second control data to conduct the transceiving (communication) of the information system data in the cyclic periods.

The host communication portion 105 is an interface of the information communication network 60 in the control device 10, and conducts communication with each device of the above-described host system.

### (Functional block of control device)

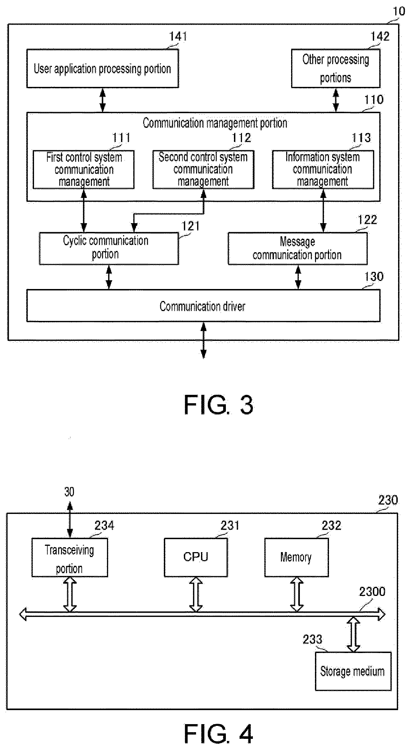

FIG. 3 is a functional block diagram of the control device.

As shown in FIG. 3, the control device 10 includes a communication management portion 110, a cyclic communication portion 121, a message communication portion 122, a communication driver 130, a user application processing portion 141 and another processing portion 142.

The communication management portion 110 conducts a first control system communication management 111, a second control system communication management 112, and an information system communication management 113. In addition, the communication management portion 110 schedules the first control system communication management 111, the second control system communication management 112 and the information system communication management 113. At this time, the communication management portion 110 allocates, based on a number and types of the slave devices serving as communication targets, a communication band of each slave device for one period of the cyclic periods.

The first control system communication management 111 conducts, in accordance with the pre-set cyclic periods, communication management of the first control data communicated at each cyclic period.

The second control system communication management 112 conducts communication management of the second control data. At this time, if the data capacity of the second control data (the request data) is larger than the largest capacity (communication capacity) of the second control data which can be communicated at one period of the cyclic periods, the second control system communication management 112 divides the second control data into a plurality of data for communication. At this time, when there is a plurality of slave devices serving as the communication targets of the second control data, the second control system communication management 112 allocates the largest capacity of the second control data to the plurality of slave devices (for example, simply divides the largest capacity by the number of the slave devices), thereby setting the largest capacity to each slave device which can be communicated at one period of the cyclic periods. Then, the second control system communication management 112 determines whether each slave device is allocated or not. The second control system communication management 112 conducts the communication management in units of a plurality of data for communication.

The information system communication management 113 conducts communication management of the information system data. At this time, if the data capacity of the information system data is larger than the largest capacity (transmission capacity) of the information system data which can be communicated at one period of the cyclic periods, the information system data is also divided into a plurality of data. Then, the information system communication management 113 conducts the communication management in units of the divided plurality of data.

The communication management portion 110 supplies the first control data and the second control data to the cyclic communication portion 121 according to the schedule of the transceiving (communication). At this time, if the second control data is divided into the plurality of data for communication, the communication management portion 110 supplies each of the plurality of data for communication to the cyclic communication portion 121.

In addition, when acquiring another new second control data (request data) while dividing the second control data (the request data) into the plurality of data for communication and communicating in units of cyclic period, the communication management portion 110 conducts the communication control according to the priority of each second control data (the request data). The specific communication control is described later.

The communication management portion 110 supplies the information system data to the message communication portion 122 according to the schedule of the transceiving. At this time, if the information system data is divided into a plurality of data, the communication management portion 110 supplies each of the plurality of data to the message communication portion 122.

The cyclic communication portion 121 converts the first control data and the second control data into a data format of the control system network 30. The cyclic communication portion 121 forms frame data from the first control data and the second control data which have been converted, and outputs the frame data to the communication driver 130 according to the schedule of the transceiving supplied from the communication management portion 110.

The message communication portion 122 outputs the information system data to the communication driver 130 according to the schedule of the transceiving supplied from the communication management portion 110.

The communication driver 130 conducts control of the transceiving portion 104, and communicates, in accordance with the cyclic periods, the first control data and the second control data via the control system network 30. At this time, if the second control data (the request data) is divided into a plurality of data for communication, the plurality of data for communication is sequentially communicated in accordance with the cyclic periods. Similarly, if the information system data is divided into a plurality of data, the divided plurality of data is communicated sequentially.

Furthermore, the user application processing portion 141 conducts the above-described user application program. The second control data from the industrial personal computer 62 is obtained by the user application processing portion 141. The another processing portion 142 conducts, for example, a start processing of the control device 10, an initial processing of control using the control system network 30, or the like.

### (Hardware configuration of slave device)

FIG. 4 is a block diagram showing a configuration of hardware of a slave device. Schematically, a slave device 230 is formed by a configuration in which the host communication portion 105 is omitted from the control device 10 shown in FIG. 2. The slave device 230 is applied to the slave device 211, the slave device 212, the slave device 221 and the slave device 222 shown in FIG. 1.

As shown in FIG. 4, as a configuration of hardware, the slave device 230 includes a CPU 231, a memory 232, a storage medium 233 and a transceiving portion 234. In the slave device 230, the CPU 231, the memory 232, the storage medium 233 and the transceiving portion 234 are connected by a data bus 2300.

The CPU 231 realizes each processing of each functional block described later by reading out a system program and a user application program stored in the storage medium 233 to the memory 232 to conduct the system program and the user application program. The memory 232 is realized by, for example, a volatile storage element such as a DRAM, a SRAM or the like. In addition, the storage medium 233 is realized by, for example, a non-volatile storage medium such as a magnetic storage medium, a flash memory or the like.

The transceiving portion 234 is an interface of the control system network 30 in the slave device 230, and conducts the transceiving (communication) in accordance with the cyclic periods of the first control data and the second control data. In addition, the transceiving portion 234 uses, for example, the communication bands different from the communication bands of the first control data and the second control data to conduct the transceiving (communication) of the information system data in the cyclic periods.

### (Functional block of slave device)

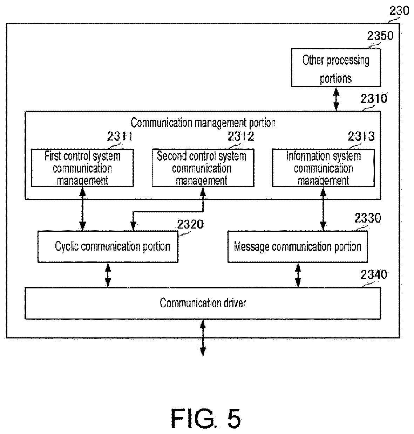

FIG. 5 is a functional block diagram of the slave device. Schematically, the slave device 230 is formed by a configuration in which the user application processing portion 141 is omitted from the control device 10 shown in FIG. 3.

As shown in FIG. 5, the slave device 230 includes a communication management portion 2310, a cyclic communication portion 2320, a message communication portion 2330, a communication driver 2340 and another processing portion 2350.

The communication management portion 2310 conducts a first control system communication management 2311, a second control system communication management 2312 and an information system communication management 2313. In addition, the communication management portion 2310 schedules the first control system communication management 2311, the second control system communication management 2312 and the information system communication management 2313. At this time, the communication management portion 2310 conducts various processing according to the schedule set by the communication management portion 110 of the control device 10.

The first control system communication management 2311 conducts, in accordance with the pre-set cyclic periods, the communication management of the first control data communicated at each cyclic period.

The second control system communication management 2312 conducts the communication management of the second control data. At this time, if the data capacity of the second control data (the request data) is larger than the largest capacity (the communication capacity) of the second control data which can be communicated at one period of the cyclic periods allocated to the slave device 230, the second control system communication management 2312 divides the second control data into a plurality of data for communication. The second control system communication management 2312 conducts the communication management in units of the plurality of data for communication.

The information system communication management 2313 conducts communication management of the information system data. At this time, if the data capacity of the information system data is larger than the largest capacity (transmission capacities) of the information system data which can be communicated at the one period of the cyclic periods, the information system data is also divided into a plurality of data. Then, the information system communication management 2313 conducts the communication management in units of the divided plurality of data.

The communication management portion 2310 supplies the first control data and the second control data to the cyclic communication portion 2320 according to the schedule of the transceiving (communication). At this time, if the second control data is divided into a plurality of data for communication, the communication management portion 2310 supplies each of the plurality of data for communication to the cyclic communication portion 2320.

At this time, the communication management portion 2310 sets a communication order of the second control data including the response data according to the priority included in the obtained request data.

For example, specifically, if new request data is received during the communication of the response data, the communication management portion 2310 compares the priority of the request data corresponding to the response data being communicated with the priority of the new request data. If the priority of the new request data is higher than the priority of request data that is an origin of the response data being communicated, the communication management portion 2310 performs communication control so as to temporarily interrupts the communication of a response data being communicated and communicate the response data which corresponds to the new request data. The specific communication control is described later.

The communication management portion 2310 supplies the information system data to the message communication portion 2330 according to the schedule of the transceiving. At this time, if the information system data is divided into a plurality of data, the communication management portion 2310 supplies each of the divided plurality of data to the message communication portion 2330.

The cyclic communication portion 2320 converts the first control data and the second control data into the data format of the control system network 30. The cyclic communication portion 2320 forms frame data from the first control data and the second control data which have been converted, and outputs the frame data to the communication driver 2340 according to the schedule of the transceiving supplied from the communication management portion 2310.

The message communication portion 2330 outputs the information system data to the communication driver 2340 according to the schedule of the transceiving supplied from the communication management portion 2310.

The communication driver 2340 conducts control of the transceiving portion 234, and communicates, in accordance with the cyclic periods, the first control data and the second control data via the control system network 30. At this time, if the second control data (the response data) is divided into a plurality of data for communication, the plurality of data for communication is sequentially communicated in accordance with the cyclic periods. Similarly, if the information system data is divided into a plurality of data, the divided plurality of data is communicated sequentially.

Furthermore, the another processing portion 2350 conducts, for example, a start processing of the slave device 230, the initial processing of the control using the control system network 30, or the like.

### (Specific communication processing)

### (1. Communication of request data)

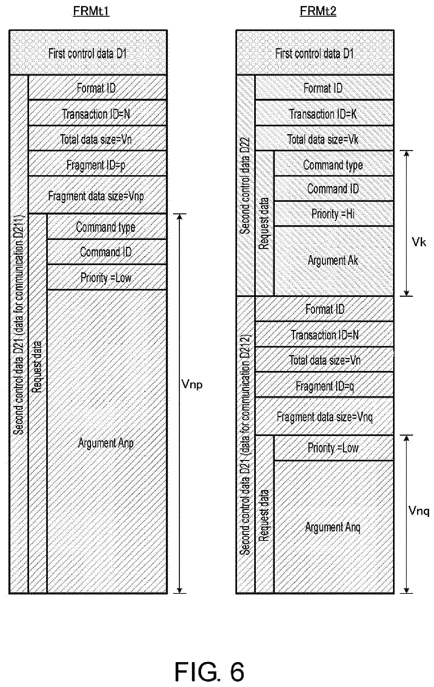

FIG. 6 is a diagram showing one example of a specific data configuration of frame data including the request data. Furthermore, in FIG. 6, consecutive frames FRMt1 and FRMt2 are shown in the diagram, and other frames have the same configuration. In addition, in FIG. 6, the second control data to one slave device is shown, and when there are a plurality of slave devices serving as communication targets of the second control data, the first control data and the second control data as shown in FIG. 6 exist for the number of the slave devices in one frame data.

If second control data D21 is obtained, the communication management portion 110 of the control device 10 stores the second control data D21 in a buffer memory provided on the communication management portion 110 or the like. The buffer memory is physically realized by, for example, a volatile storage element provided on the above-described transceiving portion 104 or the memory 102.

The communication management portion 110 takes out data for communication D211 in the second control data D21 from the buffer memory, and outputs the data for communication D211 to the cyclic communication portion 121 before the communication timing of the frame data FRMt1 in accordance with the cyclic periods arrives. The data for communication D211 is data corresponding to a communication upper limit capacity DSf of the second control data which can be communicated at one period of the cyclic periods.

The communication upper limit capacity DSf is calculated, for example, by subtracting the communication capacity of the first control data D1 from a communication capacity (a communication band) to a target slave device (here is the slave device 221) at one period of the cyclic periods.

Furthermore, although not shown in the diagram, if the data capacity of the second control data D21 stored in the buffer memory is equal to or lower than the communication upper limit capacity DSf, the communication management portion 110 takes out all the second control data D21 from the buffer memory and outputs all the second control data D21 to the cyclic communication portion 121.

The cyclic communication portion 121 communicates frame data FRMr1 including the first control data D1 and the data for communication D211 of the second control data D21.

Then, if new second control data (request data) D22 is obtained before communication of the frame data FRMt2, the communication management portion 110 compares the priority of the present second control data (request data) D21 with the priority of the second control data D22 newly obtained.

If the priority of the second control data D22 is detected to be higher than the priority of the second control data D21, the communication management portion 110 takes out the second control data D22 from the buffer memory and outputs the second control data D22 to the cyclic communication portion 121 before the communication timing of the frame data FRMt2 arrives. Furthermore, although not shown in the example of FIG. 6, when the priority of the second control data D21 is higher than the priority of the second control data D22, the communication management portion 110 may continue to control the divided communication of the second control data D21.

Furthermore, the communication management portion 110 detects that the capacity of the second control data D22 is smaller than the communication upper limit capacity DSf. The communication management portion 110 takes out data for communication D212 in the second control data D21 having a capacity communicable with the frame data FRMt2 from the buffer memory, and outputs the data for communication D212 to the cyclic communication portion 121. Furthermore, although not shown in FIG. 6, if the capacity of the second control data D22 is larger than the communication upper limit capacity DSf, the communication management portion 110 conducts control of divided communication using data for communication in a way similar to the second control data D21.

The cyclic communication portion 121 communicates the frame data FRMt2 that includes the first control data D1, the second control data D22 and data for communication D213 of the second control data D21.

By this processing, the control device 10 controls the communication of the second control data D21 and the second control data D22 with different priorities according to the respective priority. In this way, communication that can satisfy a performance request (an arrival guarantee time or the like) of the second control data D21 and a performance request (an arrival guarantee time or the like) of the second control data D22 is achieved.

Particularly, in the above-described processing, even if the second control data D22 with a higher priority is obtained in a state when the second control data D21 during the divided communication exists, the second control data D22 with a higher priority can be communicated preferentially, and the second control data D21 of which the divided communication is temporarily stopped can also be reliably communicated.

When such a processing is performed, each frame data including a plurality of second control data has, for example, the data configuration as shown in FIG. 6.

As shown in FIG. 6, the first control data and the second control data are included in the data for the target slave device that is in the frame data corresponding to communication data at one period of the cyclic periods.

Basically, in the second control data and the data for communication of each frame data, a format ID, a transaction ID, a total data size, a fragment ID, a fragment data size and the request data are included and are arranged from a first bit in this order. Furthermore, the fragment ID and the fragment data size may not be included in the second control data to which the divided communication is not performed.

The format ID is identification data of the data format of the second control data. The data format of the second control data can be recognized by the format ID.

The transaction ID is identification data showing the second control data. By comparing transaction IDs of data for communication of a plurality of frames, whether the data for communication of a plurality of frames are based on the same second control data can be determined. That is, if the transaction IDs of the data for communication of a plurality of frames are the same, it can be determined that the data for communication is based on one second control data.

The total data size shows a total data capacity of one second control data. That is, when the second control data is divided into a plurality of data for communication, the total data size is represented by a sum of the data capacities of the plurality of data for communication. The slave device 221 and the slave device 222 can detect reception errors of the second control data at the time of restoration by attaching such a total data size.

The fragment ID is identification data showing an order of each data for communication in the divided second control data. That is, by the fragment IDs, it can be identified that the data order of the data for communication of the frame after dividing the second control data before communication.

The fragment size shows the data capacity of the request data in the frame. When such a fragment size is attached, the slave device 221 and the slave device 222 can detect the reception errors by calculating the data capacity of the received request and comparing the fragment size.

The request data is data that includes a command type, a command ID, priority, and argument An or the like, and these data are arranged from the first bit in this order. The argument An includes a command group actually used for control. The command type and the command ID are data for identifying the command group recited in the argument An. The priority is data for identifying whether the request data is urgent. For example, if the priority is high (Hi), it means the urgency is high and the response data are required to be immediately replied; if the priority is Low, it means the urgency is low and there is no reply deadline of the response data or the reply deadline is long. Furthermore, here, there are two stages of Hi, Low for the priority, and there may also be multi-stages of three stages or more.

In accordance with such a data configuration, the frame data FRMt1 and the frame data FRMt2 have data configurations shown in FIG. 6.

The frame data FRMt1 includes a data configuration in which the first control data D1 and the data for communication D211 of the second control data D21 are arranged in this order.

The data for communication D211 includes a data configuration in which a format ID, a transaction ID (=N), a total data size (=Vn), a fragment ID (=p), a fragment data size (=Vnp), and request data are included and these data are arranged in this order. The request data includes a data configuration in which a command type, a command ID, priority (Low), and argument Anp are included and these data is arranged in this order.

The frame data FRMt2 includes a data configuration in which the first control data D1, the second control data D22, and the data for communication D212 of the second control data D21 are arranged in this order.

The second control data D22 includes a data configuration in which a format ID, a transaction ID (=K), a total data size (=Vk), and request data are included and these data is arranged in this order. The request data includes a data configuration in which a command type, a command ID, priority (Hi), and argument Ak are included and these data is arranged in this order.

The data for communication D212 includes a data configuration in which a format ID, a transaction ID (=N), a total data size (=Vn), a fragment ID (=q), a fragment data size (=Vnq), and a request data are included and these data is arranged in this order. The request data includes a data configuration in which a command type, a command ID, priority (Low) the same as the data for communication D211, and argument Anq are included and these data is arranged in this order.

In such a data configuration, the second control data D21 and the second control data D22 are respectively attached with priority. Therefore, the slave devices can compare the priority of the second control data D21 with the priority of the second control data D22 based on the request data. For example, in the example of FIG. 6, the slave devices can easily detect that the priority of the second control data D22 is higher than the priority of the second control data D21.

In addition, the transaction IDs of the data for communication D211 and the data for communication D212 are both N, so that the slave device 221 and the slave device 222 that receive these data can easily and reliably detect that the data for communication D211 and the data for communication D212 are data that forms the second control data D21 together.

In addition, the fragment ID of the data for communication D211 is p, and the fragment ID of the data for communication D212 is q, so that the slave device 221 and the slave device 222 that receive these data can easily and reliably detect that the argument Anp of the data for communication D212 and the argument Anq of the data for communication D213 are arranged in this order in the second control data D21.

In addition, the slave device 221 and the slave device 222 that receive these data can detect communication errors such as missing of the data for communication D211 or the like by the fragment data size Vnp, and can detect communication errors such as missing of the data for communication D212 or the like by the fragment data size Vnq.

In addition, the slave device 221 and the slave device 222 that receive these data can detect, by the total data size Vn, communication errors such as missing of the second control data D21 including the data for communication D211 and the data for communication D212, or the like, and can detect, by the total data size Vk, communication errors such as missing of the second control data D22 or the like.

### (2. Communication of response data)

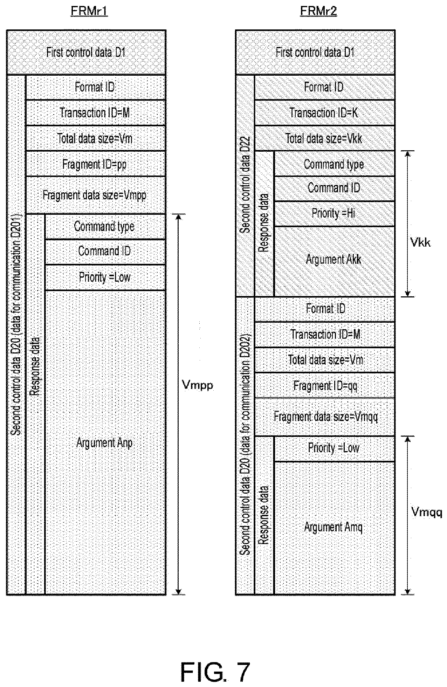

In the following part, the slave device 221 is shown as an example, and the slave device 222 also conducts a similar processing. FIG. 7 is a diagram showing one example of specific data configurations of frame data including the response data. Furthermore, in FIG. 7, consecutive frames FRMrl, FRMr2 are illustrated, and other frames also include a similar configuration. In addition, in FIG. 7, the second control data to one slave device is shown, and when there are a plurality of slave devices serving as communication targets of the second control data, the first control data and the second control data as shown in FIG. 6 exists for the number of the salve devices in one frame data.

If second control data D20 that includes response data corresponding to the request data received already is obtained, the communication management portion 2310 of the slave device 211 stores the second control data D20 in a buffer memory provided on the communication management portion 2310 or the like. The buffer memory is physically realized by, for example, a volatile storage element provided on the above-described transceiving portion 234 and the memory 232.

The communication management portion 2310 takes out data for communication D201 in the second control data D20 from the buffer memory, and outputs the data for communication D201 to the cyclic communication portion 2320 before the communication timing of the frame data FRMr1 in accordance with the cyclic periods arrives. The data for communication D201 is data corresponding to the above-described communication upper limit capacity DSf.

Furthermore, although not shown in the diagram, if the data capacity of the second control data D20 stored in the buffer memory is equal to or lower than the communication upper limit capacity DSf, the communication management portion 2310 takes out all the second control data D20 from the buffer memory and outputs all the second control data D20 to the cyclic communication portion 2320.

The cyclic communication portion 2320 communicates frame data FRMr1 including the first control data D1 and the data for communication D201 of the second control data D20.

Then, if second control data D22 including new response data is obtained before communication of the frame data FRMr2, the communication management portion 110 compares the priority of the present second control data D20 communicating the response data with the priority of the second control data D22 newly obtained.

If the priority of the second control data D22 is detected to be higher than the priority of the second control data D20, the communication management portion 2310 takes out the second control data D22 from the buffer memory and outputs the second control data D22 to the cyclic communication portion 2320 before the communication timing of the frame data FRMr2 arrives. Furthermore, although not shown in the example of FIG. 7, when the priority of the second control data D20 is higher than the priority of the second control data D22, the communication management portion 110 may continue to control the divided communication of the second control data D20.

Furthermore, the communication management portion 2310 detects that the capacity of the second control data D22 is smaller than the communication upper limit capacity DSf. The communication management portion 2310 takes out data for communication D202 in the second control data D20 having a capacity communicable with the frame data FRMr2 from the buffer memory, and outputs the data for communication D202 to the cyclic communication portion 2320. Furthermore, although not shown in FIG. 7, if the capacity of the second control data D22 is larger than the communication upper limit capacity DSf, the communication management portion 2310 conducts control of divided communication using data for communication in a way similar to the second control data D20.

The cyclic communication portion 2320 communicates the frame data FRMr2 that includes the first control data D1, the second control data (the response data) D22 and the data for communication D202 of the second control data (the response data) D20.

By this processing, the slave device 221 controls the communication for the second control data (the response data) D20 and the second control data (the response data) D22 with different priorities according to the respective priority.

In this way, when the second control data (the response data) D22 with a higher priority is obtained in a state when the second control data (the response data) D20 during the divided communication exists, the slave device 221 can communicate the second control data (the response data) D22 with a higher priority preferentially, and can also communicate the second control data (the response data) D20 of which the divided communication is temporarily stopped.

When such a processing is performed, each frame data including a plurality of second control data has, for example, the data configuration as shown in FIG. 7.

As shown in FIG. 7, the first control data and the second control data are included in the data for the target slave device that is in the frame data corresponding to communication data at one period of the cyclic periods.

Basically, in the second control data and the data for communication of each frame data, a format ID, a transaction ID, a total data size, a fragment ID, a fragment data size and the request data are included and are arranged from a first bit in this order. Furthermore, the fragment ID and the fragment data size may not be included in the second control data to which the divided communication is not performed.

The format ID, the transaction ID, the total data sizes, the fragment ID, and the fragment data size have the same definitions as the frame data shown in FIG. 6, and the description is omitted.

The response data is data in which a command type, a command ID, priority, and argument An or the like are included and arranged from the first bit in this order. The argument Am includes response information corresponding to the argument An or the like included in the above-described request data. For example, the response information includes log data with a large data capacity and location information or status information with a small data capacity, or the like. The command type and the command ID are data for identifying the response information recited in the argument An. The priority has the same definitions as the priority of the above-described request data.

In accordance with such a data configuration, the frame data FRMr1 and the frame data FRMr2 have the data configurations shown in FIG. 7.

The frame data FRMr1 includes a data configuration in which the first control data D1 and the data for communication D201 of the second control data D20 are arranged in this order.

The data for communication D201 includes a data configuration in which a format ID, a transaction ID (=M), a total data size (=Vm), a fragment ID (=pp), a fragment data size (=Vmpp), and a response data are included and these data is arranged in this order. The response data includes a data configuration in which a command type, a command ID, priority (Low), and argument Amp are included and these data is arranged in this order.

The frame data FRMr2 includes a data configuration in which the first control data D1, the second control data D22, and the data for communication D202 of the second control data D20 are arranged in this order.

The second control data D22 includes a data configuration in which a format ID, a transaction ID (=K), a total data size (=Vkk), and response data are included and these data is arranged in this order. The response data includes a data configuration in which a command type, a command ID, priority (Hi), and argument Ak are included and these data is arranged in this order.

The data for communication D202 includes a data configuration in which a format ID, a transaction ID (=M), a total data size (=Vm), a fragment ID (=qq), a fragment data size (=Vnqq), and response data are included and these data is arranged in this order. The response data includes a data configuration in which a command type, a command ID, priority (Low) the same as the data for communication D201, and argument Amq are included and these data is arranged in this order.

In such a data configuration, the transaction IDs of the data for communication D201 and the data for communication D212 are both N, so that the control device 10 that receives these data can easily and reliably detect that the data for communication D201 and the data for communication D212 are data that forms the second control data (the response data) D20 together.

In addition, the fragment ID of the data for communication D201 is pp, and the fragment ID of the data for communication D202 is qq, so that the control device 10 that receives these data can easily and reliably detect that the argument Amp of the data for communication D201 and the argument Amq of the data for communication D202 are arranged in this order in the second control data D20.

In addition, the control device 10 that receives these data can detect communication errors such as missing of the data for communication D201 or the like by the fragment data size Vmpp, and can detect communication errors such as missing of the data for communication D202 or the like by the fragment data size Vmqq.

In addition, the control device 10 that receives these data can detect, by the total data size Vm, communication errors such as missing of the second control data D20 including the data for communication D201 and the data for communication D202, or the like, and can detect, by the total data size Vkk, the communication errors such as the missing of the second control data D22 or the like.

### (Specific communication processing flow)

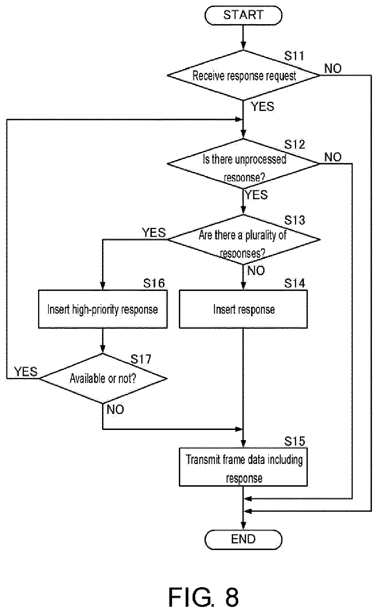

The communication control of the response data as described above is realized by conducting the processing shown below. FIG. 8 is a flowchart showing a communication method for the response data. Furthermore, the processing of the slave device 221 is shown in the following, and the slave device 222 also conducts a similar processing.

If the request data from the control device 10, that is, the response request, is received (S11: YES), the slave device 221 detects whether there is unprocessed response data (S12).

If there is unprocessed response data (S12: YES), the slave device 221 detects whether there is a plurality of unprocessed response data (S13).

If there is a plurality of response data (S13: YES), the slave device 221 compares priorities of the plurality of response data. The slave device 221 inserts the high-priority response data (S16). If the frame to which the high-priority response data is inserted is not available (S17: NO), the slave device 221 transmits the frame data to which the high-priority response data is inserted (S15).

If the frame to which the high-priority response data is inserted is available (S17: YES), the slave device 221 returns to S12.

In addition, if there is only one piece of response data (S13: NO), the slave device 221 inserts the response data (S14) and transmits the frame data to which the response data is inserted (S15).

Besides, if there is no unprocessed response data (S12: NO) and no new response request (S11: NO), the slave device 221 ends the processing.

By performing such communication control, when there is a more urgent response request during the communication of the response data, the slave device 221 can quickly communicate the response data corresponding to the urgent response request.

### [Description of the Symbols]

- 1: control system
- 10: control device
- 30: control system network
- 60: information communication network
- 61: personal computer
- 62: industrial personal computer
- 63: database device
- 100, 2300: data bus
- 101, 231: CPU
- 102, 232: memory
- 103, 233: storage medium
- 104, 234: transceiving portion
- 105: host communication portion
- 110, 2310: communication management portion
- 111, 2311: first control system communication management
- 112, 2312: second control system communication management
- 113, 2313: information system communication management
- 121, 2320: cyclic communication portion
- 122, 2330: message communication portion
- 130, 2340: communication driver
- 141: user application processing portion
- 142, 2350: another processing portion
- 211, 212, 221, 222, 230: slave device

## Claims

1. A slave device (211, 212, 221, 222, 230), **characterized in that**, the slave device (211, 212, 221, 222, 230) comprises:
a cyclic communication portion (121, 2320) that communicates in accordance with pre-set cyclic periods; and
a communication management portion (110, 2310) that manages communication of response data corresponding to a response request from a control device (10); wherein
if a request of the response data with high priority is received during communication of the response data with low priority over a plurality of cyclic periods, the communication management portion (110, 2310) temporarily interrupts the communication of the response data with low priority to communicate the response data with high priority.

2. The slave device (211, 212, 221, 222, 230) according to claim 1, wherein
if there are residual capacities in the cyclic periods for communicating the response data with high priority, the communication management portion (110, 2310) allocates the residual capacities to the temporarily interrupted response data with low priority.

3. The slave device (211, 212, 221, 222, 230) according to claim 1 or 2, wherein
the communication management portion (110, 2310) determines priority based on priority data attached to the response request.

4. A control system, **characterized in that**, the control system comprises the slave device (211, 212, 221, 222, 230) according to any one of claims 1 to 3 and the control device (10), wherein
the slave device (211, 212, 221, 222, 230) is a robot device or a robot control device (10).

5. A communication method for response data, **characterized in that**, the communication method comprises:
a cyclic communication processing that communicates in accordance with pre-set cyclic periods; and
a communication management processing that manages communication of response data corresponding to a response request from a control device (10); wherein
if a request of the response data with high priority is received during communication of the response data with low priority over a plurality of cyclic periods, the communication management processing temporarily interrupts the communication of the response data with low priority to communicate the response data with high priority.

6. A non-transitory computer readable storage medium that storing a communication program for response data, **characterized in that**, the communication program causes an information processing device (211, 212, 221, 222, 230) to execute:
a cyclic communication processing that communicates in accordance with pre-set cyclic periods; and
a communication management processing that manages communication of response data corresponding to a response request from a control device (10), wherein
the communication program causes an information processing device (211, 212, 221, 222, 230) to execute:
a processing of temporarily interrupting the communication of the response data with low priority to communicate the response data with high priority if a request of the response data with high priority is received during communication of the response data with low priority over a plurality of cyclic periods in the communication management processing.
